# EUROPÄISCHE PATENTSCHRIFT

(11) **EP 2 489 977 B1**
(45) Veröffentlichungstag und Bekanntmachung des Hinweises auf die Patenterteilung: **21.11.2018**
(21) Anmeldenummer: 12000475.9
(22) Anmeldetag: 25.01.2012
(51) Int. Cl.: G01B 11/25

(54) **Verfahren zur Bestimmung der 3-D-Koordinaten eines Objekts und zum Kalibrieren eines Industrieroboters**
Method for determining the 3D coordinates of an object and calibrating an industrial robot
Procédé destiné à la détermination des coordonnées 3-D d'un objets et d'étalonnage d'un robot industriel

(30) Priorität: 16.02.2011 DE 102011011360
(43) Veröffentlichungstag der Anmeldung: 22.08.2012
(73) Patentinhaber: Carl Zeiss Optotechnik GmbH, 83115 Neubeuern (DE)
(72) Erfinder: Steinbichler, Marcus, Dr., 83115 Neubeuern (DE); Mayer, Thomas, 83059 Kolbermoor (DE); Daxauer, Herbert, 6344 Walchsee (AT); Thamm, Christian, 83022 Rosenheim (DE); Oberndorfner, Sebastian, 83024 Rosenheim (DE)
(74) Vertreter: Zinnecker, Armin

(56) Entgegenhaltungen:
- EP-A1- 1 593 930
- EP-A1- 2 273 229
- EP-A2- 1 134 546
- WO-A1-02/27264
- WO-A2-2009/086495
- DE-A1- 19 840 334
- DE-B3-102005 020 844
- US-A- 4 753 569
- US-A- 5 083 073
- US-A- 5 198 877
- US-A- 6 078 846
- US-A1- 2003 025 788
- US-A1- 2003 112 448
- US-A1- 2006 265 177
- US-A1- 2009 067 706
- US-A1- 2009 323 121

## Beschreibung

Die Erfindung betrifft ein Verfahren entsprechend der Definition des Anspruchs 1, zur Bestimmung der 3-D-Koordinaten eines Objekts und zum Kalibrieren eines Industrieroboters. Bei einem vorbekannten Verfahren zur Bestimmung der 3D-Koordinaten eines Objekts wird das Objekt mit einem Streifenprojektionssystem aufgenommen. Das Streifenprojektionssystem umfaßt einen Projektor zum Projizieren eines Streifenmusters auf das Objekt und eine Kamera zum Aufnehmen des von dem Objekt zurückgestrahlten Streifenmusters. Die Aufnahme wird von einem Auswertesystem, das einen Rechner, insbesondere einen PC umfaßt, ausgewertet.

Da zur Bestimmung der 3D-Koordinaten des Objekts in der Regel eine einzige Aufnahme nicht ausreicht, um die Meßanforderungen zu erfüllen und/oder das Objekt vollständig zu erfassen, ist es erforderlich, das Streifenprojektionssystem im Raum an verschiedenen Aufnahmepositionen zu positionieren und die dort hergestellten Aufnahmen in ein gemeinsames, übergeordnetes Koordinatensystem, das auch als absolutes Koordinatensystem bezeichnet werden kann, zu überführen. Dieser häufig als "globale Registrierung" bezeichnete Prozeß erfordert eine hohe Genauigkeit.

Bei einem vorbekannten Verfahren dieser Art werden Aufnahmen hergestellt, die sich teilweise überlappen. Diese Aufnahmen können über eine Optimierung der Überlappungsbereiche zueinander orientiert werden. Das Verfahren ist allerdings bei größeren Objekten mit wenig Oberflächenstruktur möglicherweise nicht hinreichend genau. Auch der zusätzliche Einsatz von Meßmarken, die in den Überlappungsbereichen auf dem Objekt aufgebracht werden und die Verknüpfungspunkte bilden, bringt oftmals keine ausreichende Verbesserung.

Ferner sind Verfahren bekannt, bei denen Meßmarken verwendet werden, die auf dem Objekt und/oder auf einer oder mehreren das Objekt umgebenden Kulissen angebracht werden. Die Meßmarken werden zunächst eingemessen. Dies erfolgt vorzugsweise nach dem Verfahren der Photogrammetrie. Mit Hilfe der Meßmarken, die durch ein Streifenprojektionssystem erfaßt werden, können die verschiedenen Aufnahmen des Objekts auf die eingemessenen Punkte transformiert werden, so daß eine globale Registrierung möglich ist.

Aus EP 2 273 229 A1 ist ein Verfahren bekannt, bei dem zur Bestimmung der 3D-Koordinaten eines Objekts ein Streifenmuster von einem Projektor auf das Objekt projiziert wird. Das von dem Objekt reflektierte Streifenmuster wird von einer Kamera aufgenommen, die eine Optik und einen Flächensensor, insbesondere einen CCD-Sensor oder CMOS-Sensor umfaßt. Der Projektor und die Kamera bilden ein Streifenprojektionssystem. In der Nähe des Objekts sind mehrere Referenzkulissen angeordnet, die jeweils mehrere Referenzmarken aufweisen. Die Referenzkulissen werden zunächst vermessen. Anschließend werden die 3D-Koordinaten des Objekts durch das Streifenprojektionssystem bestimmt.

Auch bei der Bestimmung der 3D-Koordianten eines Objekts nach dem Verfahren der EP 2 273 229 A1 reicht es in der Regel nicht aus, nur eine einzige Aufnahme anzufertigen, da das Objekt oder der interessierende Bereich des Objekts größer ist als das Gesichtsfeld der Kamera. Dementsprechend ist es erforderlich, das aus dem Projektor und der Kamera bestehende Streifenprojektionssystem an verschiedenen Positionen zu positionieren. Die an der jeweiligen Position hergestellten Aufnahmen werden anschließend in ein gemeinsames, übergeordnetes Koordinatensystem überführt.

Das Verfahren nach der EP 2 273 229 A1 ist allerdings oftmals mit einem nicht unerheblichen Aufwand verbunden, insbesondere, wenn dieses Verfahren in einer automatisierten Meßanlage durchgeführt werden soll, die in einen Fertigungsprozeß integriert ist. In solchen Anlagen ist es vorteilhaft, einen Industrieroboter zur Positionierung des aus Projektor und Kamera bestehenden Streifenprojektionssystems zu verwenden. Die Positionsinformation des Roboters kann dann als Näherungswert für die Bestimmung der Lage und Orientierung des Streifenprojektionssystems verwendet werden. Die Genauigkeit dieser Roboter-Positionsinformation ist allerdings für die Zwecke der globalen Registrierung in der Regel nicht ausreichend.

Ein weiterer Nachteil entsteht dann, wenn mit dem Verfahren nach der EP 2 273 229 A1 die 3D-Koordinaten von Objekten verschiedener Art bestimmt werden sollen. In diesem Fall müssen für jede Objektart verschiedene, an die jeweilige Größe des Objekts angepaßte Kulissen aufgebaut und eingemessen werden.

Ferner kann es sein, daß aufgrund der Plazierung der Referenzkulissen das Objekt, dessen 3D-Koordinaten bestimmt werden sollen, nicht mehr oder nicht mehr ausreichend zugänglich ist. Durch die Referenzkulissen können die Bewegungswege des Roboters eingeschränkt werden. Ferner können durch die Referenzkulissen Teile des Objekts verdeckt werden. Auch die Beschickung des von den Referenzkulissen umgebenen Bereichs mit neu zu bestimmenden Objekten kann sich schwierig gestalten.

Aus der EP 2 273 229 A1 ist ein Verfahren zur Bestimmung der 3D-Koordinaten eines Objekts bekannt, bei dem das Objekt von mehreren Referenzkulissen mit kodierten Referenzmarken umgeben ist. Von dem Objekt werden mehrere Aufnahmen derart hergestellt, daß darauf jeweils ein Teil des Objekts und ein Teil einer Referenzkulisse enthalten ist.

Aus der US 2006/265177 A1 ist ein Verfahren zum Bestimmen der 3D-Koordinaten der Oberfläche eines Objekts bekannt, das mittels eines optischen 3D-Meßgeräts durchgeführt werden kann. Die Position des 3D-Meßgeräts wird von einem Tracking-System bestimmt.

Aus der US 5,198,877 A ist ein ähnliches Verfahren zum Bestimmen der 3D-Koordinaten der Oberfläche eines Objekts bekannt.

Optische 3D-Meßverfahren, die Referenzkameras und Felder von Referenzmarken verwenden, sind aus US 2009/323121 A1, US 2009/067706 A1, und US 2003/025788 A1 bekannt.

In US4753569 A werden Referenzkameras und Felder von Referenzmarken verwendet um einen Roboterarm zu kalibrieren.

Eine Aufgabe der Erfindung ist es, ein verbessertes Verfahren zur Bestimmung der 3D-Koordinaten eines Objekts vorzuschlagen. Die Vorrichtung, die in diesem Verfahren betrieben wird und als solche nicht beansprucht wird, umfaßt einen Projektor zum Projizieren eines Musters auf das Objekt, eine mit dem Projektor verbundene Kamera zum Aufnehmen des Objekts und eine mit dem Projektor und der Kamera verbundene Referenzkamera zum Aufnehmen einer oder mehrerer Referenzmarken eines Feldes von Referenzmarken. Das von dem Projektor projizierte Muster ist insbesondere ein Streifenmuster. Besonders geeignet ist eine Weißlicht-Streifenprojektion. Die Kamera umfaßt vorzugsweise einen Flächensensor, insbesondere einen CCD-Sensor, einen CMOS-Sensor oder sonstigen Flächensensor. Vorteilhaft ist es, wenn die Kamera eine Optik umfaßt. Die Kamera kann mit dem Projektor unmittelbar oder mittelbar verbunden sein. Sie ist derart ausgerichtet, daß sie das vom Objekt abgestrahlte Muster aufnehmen kann. Die Referenzkamera ist mit dem Projektor und der Kamera unmittelbar oder mittelbar verbunden. Ihre Lage und Orientierung ist gegenüber dem Projektor und der Kamera fixiert. Der Projektor, die Kamera und die Referenzkamera bilden ein Meßsystem zur Bestimmung der 3D-Koordinaten des Objekts.

Die Vorrichtung umfaßt eine oder mehrere weitere Referenzkameras. Die eine oder mehreren weiteren Referenzkameras sind in ihrer Lage und Orientierung gegenüber dem Projektor, der Kamera und der ersten Referenzkamera fixiert. Sie können unmittelbar oder mittelbar mit dem Projektor und/oder der Kamera und/oder der Referenzkamera verbunden sein. Vorteilhaft ist es, wenn die Richtung der optischen Achse der weiteren Referenzkamera oder der weiteren Referenzkameras von der Richtung der optischen Achse der Kamera und/oder der (ersten) Referenzkamera und/oder der weiteren Referenzkameras verschieden ist. Im allgemeinen ist die erzielbare Genauigkeit um so größer, je mehr Referenzkameras verwendet werden und/oder je unterschiedlicher deren optische Achsen und damit Blickrichtungen verteilt sind. In bestimmten Fällen kann es vorteilhaft sein, wenn die optischen Achsen der Referenzkameras senkrecht zueinander stehen. Beispielsweise können drei Referenzkameras vorhanden sein, deren optische Achsen senkrecht zueinander stehen. Es sind allerdings auch andere Ausgestaltungen möglich.

Die Referenzkameras können an einem Kameramodul vorgesehen sein. Sie können an dem Kameramodul lösbar oder unlösbar befestigt sein.

Die Vorrichtung umfaßt weiter eine Auswerteeinrichtung zum Ermitteln der Lage und/oder der Orientierung des Projektors und/oder der Kamera und/oder der einen oder mehreren Referenzkameras. Die Auswerteeinrichtung kann von einem Computer, insbesondere einem PC gebildet werden. Die Ermittlung der Lage oder Lagen und/oder der Orientierung oder Orientierungen kann im Wege der Bündelblockausgleichung erfolgen.

Die Vorrichtung zur Bestimmung der 3D-Koordinaten eines Objekts umfasst auch einen Industrieroboter zum Positionieren dieser Vorrichtung.

Die Vorrichtung umfaßt außerdem ein Feld von Referenzmarken. Die Referenzmarken können an einer oder mehreren Wänden angebracht sein. Es ist allerdings auch möglich, die Referenzmarken auf andere Weise anzubringen. Die Wände, an denen die Referenzmarken angebracht sind, können eine Meßzelle für das Objekt bilden. Die Meßzelle kann geschlossen oder offen sein.

Bei einem Verfahren zur Bestimmung der 3D-Koordinaten eines Objekts wird die Aufgabe der Erfindung dadurch gelöst, daß das Objekt vor einem Feld von Referenzmarken positioniert wird, das Objekt vollständig oder teilweise mit der Vorrichtung aufgenommen wird und eine oder mehrere Referenzmarken eines Feldes von Referenzmarken von einer oder mehreren Referenzkameras aufgenommen wird.

Vorteilhaft ist es, wenn weitere Teile des Objekts aufgenommen werden. Vorzugsweise überlappen sich einige oder alle Aufnahmen der Teile des Objekts.

Im Verfahren des Anspruchs 1 wird das Feld von Referenzmarken zumindest einmalig photogrammetrisch eingemessen.

Bei dem Verfahren nach Anspruch 1 erfolgt auch ein Kalibrieren des Industrieroboters. Dabei handelt es sich vorzugsweise um einen mehrachsigen Industrieroboter.

Eine weitere Aufgabe der Erfindung ist es, ein verbessertes Verfahren zum Kalibrieren eines Industrieroboters vorzuschlagen.

Erfindungsgemäß wird auch diese Aufgabe durch die Merkmale des Anspruchs 1 gelöst. Nach dem Verfahren wird eine Vorrichtung zur Bestimmung der 3D-Koordinaten eines Objekts von dem Industrieroboter in mehreren vorgegebenen Positionen positioniert. Diese Positionen können nach ihrer Lage und/oder Orientierung vorgegeben sein. In diesen Positionen werden eine oder mehrere oder alle Referenzmarken eines Feldes von Referenzmarken von der Vorrichtung aufgenommen. Aus diesen Aufnahmen werden die Positionen des Industrieroboters bestimmt. Die Positionen des Industrieroboters können nach ihrer Lage und/oder Orientierung bestimmt werden. Bei den vorgegebenen und bestimmten Positionen des Industrieroboters kann es sich um die Positionen des äußersten Arms des Industrieroboters handeln. Die Positionen des Industrieroboters, die aus den Aufnahmen bestimmt worden sind, werden mit den vorgegebenen Positionen des Industrieroboters verglichen. Dieser Vergleich liefert ein Maß für die Abweichungen der tatsächlichen Positionen des Industrieroboters von den vorgegebenen Positionen. Dieses Maß kann bei zukünftig vorzugebenden Positionen des Industrieroboters als Korrekturwert berücksichtigt werden. Es ist auch möglich, aus mehreren Korrekturwerten für verschiedene vorgegebene Positionen eine Korrekturmatrix zu bilden, die auch für dazwischen liegende Positionen Korrekturwerte liefert, beispielsweise aufgrund einer Interpolation. Die Interpolation kann mit verschiedenen geeigneten Funktionen durchgeführt werden.

Dieses Verfahren ermöglicht es, ausschließlich die Position des Roboters zur globalen Registrierung der jeweiligen Aufnahme zu verwenden. Dies ist insbesondere dann vorteilhaft, wenn es nicht möglich ist, daß die eine oder die mehreren Referenzkameras eine ausreichende Anzahl von Referenzmarken aufnehmen können. Dies kann insbesondere dann der Fall sein, wenn die 3D-Koordinaten im Innenraum eines Objekts, beispielsweise einer Karosserie, bestimmt werden sollen.

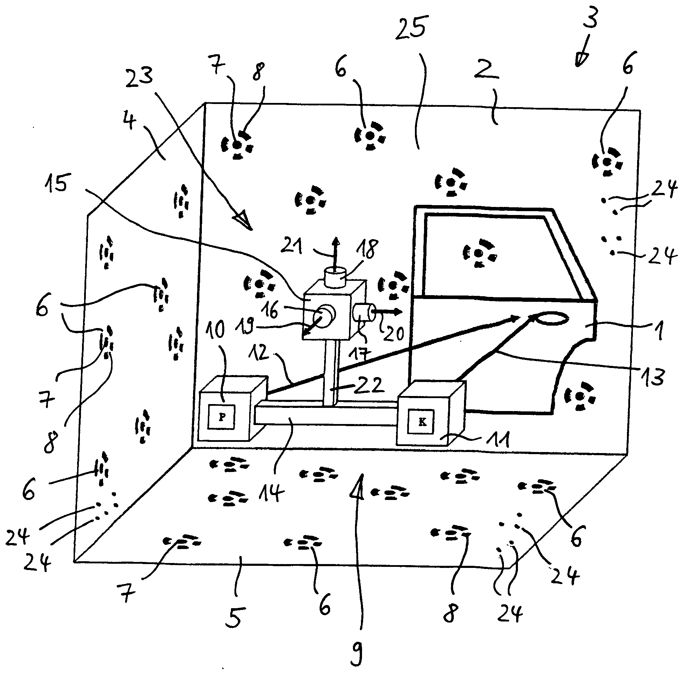

Ein Ausführungsbeispiel der Erfindung wird nachstehend anhand der beigefügten Zeichnung im einzelnen erläutert. In der Zeichnung zeigt die
- einzige Figur: eine Vorrichtung zur Bestimmung der 3D-Koordinaten eines Objekts in einer perspektivischen Darstellung.

Der in der Zeichnung gezeigte Meßaufbau dient dazu, die 3D-Koordinaten der Vorderseite eines Objekts 1, nämlich einer Kraftfahrzeugtür (Rohbautür) zu bestimmen. Das Objekt 1 ist vor einer hinteren Wand 2 einer Meßzelle 3 positioniert. Die Meßzelle 3 umfaßt die hintere Wand 2, die linke Seitenwand 4 und die Bodenwand 5. Die Meßzelle 3 umfaßt ferner eine rechte Seitenwand, eine Rückwand und eine Deckenwand (in der Zeichnung nicht dargestellt).

An den Wänden der Meßzelle 3 sind Referenzmarken 6 angeordnet, die in sich kodiert sind, und Referenzmarken 24, die nicht in sich kodiert sind, die aber derart räumlich zueinander angeordnet sind, daß diese räumliche Anordnung eine Kodierung beinhaltet. Die Referenzmarken 6, 24 bilden ein Feld 25 von Referenzmarken. Jede in sich kodierte Referenzmarke 6 umfaßt ein unveränderliches, nicht kodierendes Element und ein veränderliches, kodierendes Element. Das nicht kodierende Element wird von einem Kreis 7 gebildet, der sich in der Mitte der kodierten Referenzmarke 6 befindet. Das kodierende Element wird von Segmentabschnitten 8 gebildet. Entgegen der Darstellung in der Zeichnung ist das kodierende Element 8 bei jeder kodierten Referenzmarke 6 verschieden. Durch die verschiedenen kodierenden Elemente 8 ist eine eindeutige Identifikation jeder kodierten Referenzmarke 6 möglich.

In der Meßzelle 3 ist ein Streifenprojektionssystem 9 angeordnet. Das Steifenprojektionssystem 9 umfaßt einen Projektor 10 und eine Kamera 11. Von dem Projektor 10 wird ein Muster, insbesondere ein Streifenmuster, auf das Objekt 1 projiziert, wie durch den Pfeil 12 angedeutet. Die Kamera 11 nimmt das von dem Objekt 1 entsprechend seiner räumlichen Oberfläche zurückgestrahlte Streifenmuster auf, wie durch den Pfeil 13 angedeutet. Der Projektor 10 und die Kamera 11 sind durch ein Gestänge 14 miteinander verbunden. Sie sind in ihrer Lage und Orientierung zueinander fixiert.

Mit dem Streifenprojektionssystem 9 ist ein Kameramodul 15 verbunden. Das Kameramodul 15 umfaßt eine erste Referenzkamera 16, eine zweite Referenzkamera 17 und eine dritte Referenzkamera 18. Die optische Achse 19 und damit die Blickrichtung der ersten Referenzkamera 16 ist auf die Rückwand der Meßzelle 3 gerichtet, die optische Achse 20 und damit die Blickrichtung der zweiten Referenzkamera 17 ist auf die rechte Seitenwand der Meßzelle 3 gerichtet und die optische Achse 21 und damit die Blickrichtung der dritten Referenzkamera 18 ist auf die Deckenwand der Meßzelle 3 gerichtet. Die rechte Seitenwand, die Rückwand und die Deckenwand der Meßzelle sind ebenfalls mit Referenzmarken 6, 24 versehen. Das Kameramodul 15 ist in seiner Lage und Orientierung gegenüber dem Streifenprojektionssystem 9 fixiert. Es ist über ein Gestänge 22 mit dem Gestänge 14 des Streifenprojektionssystems 9 verbunden. Das Streifenprojektionssystem 9 und das Kameramodul 15 bilden ein Meßsystem 23.

In einem ersten Meßdurchlauf werden die Positionen der Referenzmarken 6, 24 der Meßzelle 3 erfaßt und gespeichert. In diesem Meßdurchlauf befindet sich vorzugsweise kein Objekt 1 in der Meßzelle 3. Die Bestimmung der Positionen der Referenzmarken 6, 24 erfolgt im Wege der Photogrammetrie. Dabei werden Aufnahmen der Referenzmarken 6, 24 aus verschiedenen Kamerapositionen hergestellt. Dies kann durch die Kamera 11 erfolgen. Es ist allerdings auch möglich, die Photogrammetrie der Referenzmarken 6, 24 unabhängig von dem Streifenprojektionssystem 9 durchzuführen. In beiden Fällen ist es möglich, aber nicht zwingend, die Kamera durch einen Industrieroboter zu positionieren.

Nach der Bestimmung der Positionen der Referenzmarken 6, 24 können die 3D-Koordinaten von Objekten bestimmt werden. Hierzu wird das Objekt 1 wie aus der Zeichnung ersichtlich in der Meßzelle 3 positioniert. Der Projektor 10 projiziert ein Streifenmuster auf die Oberfläche des Objekts 1, die Kamera 11 nimmt das reflektierte Streifenmuster auf und eine oder mehrere oder alle Referenzkameras 16, 17, 18 nehmen Referenzmarken 6, 24 des Feldes 25 von Referenzmarken auf.

Bei der Verwendung von nur einer Referenzkamera ist es im allgemeinen erforderlich, bei einer Aufnahme mindestens drei kodierende Referenzmarken 6 zu erfassen. Bei der Verwendung von drei Referenzkameras ist es im allgemeinen erforderlich, daß jede Referenzkamera mindestens eine kodierende Referenzmarke 6 erfaßt.

In einer Auswerteinrichtung, insbesondere in einem Computer, insbesondere in einem PC (in der Zeichnung nicht dargestellt) wird aus der oder den Aufnahmen der Referenzmarken 6, 24, die von der oder den Referenzkameras 16, 17, 18 hergestellt worden sind, die Lage und Orientierung des Meßsystems 23 bestimmt. Hierdurch ist es möglich, aus dem Aufnahmen der Kamera 11 die 3D-Koordinaten des Objekts 1 zu bestimmen.

Wenn das Objekt 1 größer ist als das Gesichtsfeld der Kamera 11, müssen von dem Objekt 1 mehrere Aufnahmen gemacht werden. Diese Aufnahmen können einander teilweise überlappen. Aufgrund der Aufnahmen der Referenzmarken 6, 24 durch eine oder mehrere Referenzkameras 16, 17, 18 ist es möglich, für jede einzelne Aufnahme eines Teiles des Objekts 1 durch die Kamera 11 die 3D-Koordinaten der zugehörigen Teiloberfläche des Objekts 1 als Absolut-Koordinaten zu bestimmen.

Die Vorrichtung umfaßt ferner eine Auswerteeinrichtung zum Ermitteln der Lage und Orientierung des Meßsystems 23, also des Projektors 10, der Kamera 11 und der Referenzkameras 16, 17, 18. Auch diese Auswerteeinrichtung kann von einem Computer, insbesondere einem PC gebildet werden (in der Zeichnung nicht dargestellt).

Das Meßsystem 23 wird erfindungsgemäß von einem Industrieroboter positioniert (in der Zeichnung nicht dargestellt).

Durch die Erfindung wird ein Verfahren zur globalen Registrierung eines Objekts geschaffen. Eine Meßzelle, in der ein Robotersystem operieren kann, ist mit Referenzmarken bestückt. Das Feld von Referenzmarken wird einmalig photogrammetrisch eingemessen. Die einzelnen Meßaufnahmen zur Bestimmung der 3D-Koordinaten des Objekts können in das Koordinatensystem der Referenzmarken überführt werden.

Eine oder mehrere, in verschiedene Raumrichtungen blickende Referenzkameras 16, 17, 18 werden mechanisch fest mit dem Streifenprojektionssystem 9 verbunden und mittels einer geeigneten Kalibrierung in ein gemeinsames Koordinatensystem mit diesem gebracht. Diese Kalibrierung kann dadurch erfolgen, daß das Streifenprojektionssystem 9 und das Kameramodul 15 gleichzeitig, vorzugsweise mehrfach, jeweils eine Teilmenge der Referenzmarken messen. In einer photogrammetrischen Bündelblockausgleichung können dann gemeinsam die äußeren bzw. relativen Orientierungen der Referenzkameras 16, 17, 18 des Kameramoduls 15 sowie von Projektor 10 und Kamera 11 des Streifenprojektionssystems 9 ermittelt werden.

Bei der Vermessung des Objekts 1, also der Bestimmung der 3D-Koordinaten des Objekts 1, erfolgt die exakte Bestimmung der Position und Orientierung des Streifenprojektionssystems 9 über das Kameramodul 15 und die Referenzmarken 6, 24, vorzugsweise im Verfahren einer photogrammetrischen Bündelblockausgleichung. Mit Hilfe dieser Informationen können die einzelnen Meßaufnahmen des Objekts 1 in ein gemeinsames Koordinatensystem überführt werden.

Des weiteren ist eine Nachvermessung des Feldes 25 von Referenzmarken innerhalb der Meßzelle 3 möglich. Dies kann mit Hilfe eines Roboterprogramms und des Meßsystems 23 erfolgen. Dabei gehen die aus der Erstvermessung bekannten Koordinaten der Referenzmarken 6, 24 als Näherungswerte in die Bündelblockausgleichung ein.

Erfindungsgemäß wird das Meßsystem 23 auch zum Kalibrieren eines Industrieroboters eingesetzt. Wenn die Positionen der Referenzmarken 6, 24 erfaßt und gespeichert sind, ist die Position des Industrieroboters mit Hilfe des Feldes 25 von Referenzmarken und mit Hilfe des Meßsystems 23 sehr exakt erfaßbar.

Die erforderlichen Kalibrierinformationen des Roboters ergeben sich aus einem Vergleich der Transformationen der Referenzmessungen mit den manuell vorgegebenen Positionen im Roboterkoordinatensystem.

## Patentansprüche

1. Verfahren zum Betrieb einer Vorrichtung, welche ein Messsystem zur Bestimmung der 3D-Koordinaten eines Objekts (1) mit einem Projektor (10) zum Projizieren eines Musters auf das Objekt (1), einer mit dem Projektor (10) in Lage und Orientierung fixiert verbundenen Kamera (11) zum Aufnehmen des Objekts (1) und mindestens einer mit dem Projektor (10) und der Kamera (11) in Lage und Orientierung fixiert verbundenen Referenzkamera (16) zum Aufnehmen einer oder mehrerer Referenzmarken (6, 24) eines Feldes (25) von Referenzmarken,
eine Auswerteeinrichtung zum Ermitteln der Lage und der Orientierung des Messsystems aus einer oder mehreren Aufnahmen der Referenzkamera und einen Industrieroboter zum Positionieren des Messsytems umfasst,
wobei nach dem Verfahren
- das Feld von Referenzmarken zumindest einmalig photogrammetrisch eingemessen wird und
- das Messsystem zum Kalibrieren des Industrieroboters eingesetzt wird, indem die Position des Industrieroboters mit Hilfe des Feldes von Referenzmarken und des Messsystems erfasst wird.

2. Verfahren nach Anspruch 1, **dadurch gekennzeichnet, dass** das Messsystem eine oder mehrere weitere Referenzkameras (17, 18) umfasst.

3. Verfahren nach Anspruch 2, **dadurch gekennzeichnet, daß** die Referenzkameras (16, 17, 18) an einem Kameramodul (15) vorgesehen sind.

4. Verfahren nach einem der vorangegangenen Ansprüche, wobei das Messsystem zur Bestimmung der 3D-Koordinaten eines Objekts (1) eingesetzt wird,
**dadurch gekennzeichnet,**
**daß** das Objekt (1) vor einem Feld von Referenzmarken (6, 24) positioniert wird, das Objekt (1) vollständig oder teilweise mit dem Messsystem aufgenommen wird und eine oder mehrere Referenzmarken (6, 24) eines Feldes (25) von Referenzmarken von einer oder mehreren Referenzkameras (16, 17, 18) aufgenommen werden.

5. Verfahren nach Anspruch 4, **dadurch gekennzeichnet, daß** weitere Teile des Objekts (1) mit dem Messsystem aufgenommen werden.

6. Verfahren nach einem der vorangegangenen Ansprüche, wobei das Einmessen des Feldes von Referenzmarken (6, 24) erfolgt,
indem das Messsystem von dem Industrieroboter in mehreren Positionen positioniert wird, eine oder mehrere oder alle Referenzmarken (6, 24) von dem Messsystem in diesen Positionen aufgenommen werden und daß die Positionen der Referenzmarken (6, 24) aus diesen Aufnahmen bestimmt werden.

7. Verfahren nach einem der vorangegangenen Ansprüche,
wobei das Messsystem zum Kalibrieren des Industrieroboters in mehreren vorgegebenen Positionen positioniert wird, eine oder mehrere oder alle Referenzmarken (6, 24) eines Feldes (25) von Referenzmarken von dem Messsystem in diesen Positionen aufgenommen werden und die Positionen des Industrieroboters aus diesen Aufnahmen bestimmt und mit den vorgegebenen Positionen verglichen werden.

8. Verfahren nach einem der vorangegangenen Ansprüche, wobei das Messsystem zum Bestimmen der 3D-Koordinaten eines Objekts eingesetzt wird,
**dadurch gekennzeichnet,**
**daß** das Messsystem mit dem Projektor (10) zum Projizieren eines Musters auf das Objekt (1) und der mit dem Projektor verbundenen Kamera (11) zum Aufnehmen des Objekts (1) von dem Industrieroboter positioniert wird und das Objekt von dem Messsystem aufgenommen wird.

## Claims

1. Method for operating an apparatus, which comprises a measurement system for determining the 3D coordinates of an object (1) with a projector (10) for projecting a pattern onto the object (1), a camera (11), securely connected to the projector (10) in terms of position and orientation, for recording the object (1) and at least one reference camera (16), securely connected to the projector (10) and the camera (11) in terms of position and orientation, for recording one or more reference marks (6, 24) of a field (25) of reference marks,
an evaluation device for establishing the position and orientation of the measurement system from one or more recordings of the reference camera and an industrial robot for positioning the measurement system,
wherein, according to the method,
- the field of reference marks is calibrated at least once by photogrammetry and
- the measurement system is used to calibrate the industrial robot by virtue of the position of the industrial robot being captured with the aid of the field of reference marks and the measurement system.

2. Method according to Claim 1, **characterized in that** the measurement system comprises one or more further reference cameras (17, 18).

3. Method according to Claim 2, **characterized in that** the reference cameras (16, 17, 18) are provided at a camera module (15).

4. Method according to any one of the preceding claims, wherein the measurement system is used for determining the 3D coordinates of an object (1),
**characterized**
**in that** the object (1) is positioned in front of a field of reference marks (6, 24), the object (1) is completely or partly recorded by the measurement system and one or more reference marks (6, 24) of a field (25) of reference marks is recorded by one or more reference cameras (16, 17, 18) .

5. Method according to Claim 4, **characterized in that** further parts of the object (1) are recorded by the measurement system.

6. Method according to any one of the preceding claims, wherein the field of reference marks (6, 24) is calibrated
by virtue of the measurement system being positioned in a plurality of positions by the industrial robot, one or more or all reference marks (6, 24) being recorded in these positions by the measurement system and in that the positions of the reference marks (6, 24) are determined from these recordings.

7. Method according to any one of the preceding claims,
wherein the measurement system is positioned in a plurality of predetermined positions for the purposes of calibrating the industrial robot, one or more or all reference marks (6, 24) of a field (25) of reference marks are recorded in these positions by the measurement system and the positions of the industrial robot are determined from these recordings and compared to the predetermined positions.

8. Method according to any one of the preceding claims, wherein the measurement system is used to determine the 3D coordinates of an object,
**characterized**
**in that** the measurement system is positioned with the projector (10) for projecting a pattern onto the object (1) and the camera (11), connected to the projector, for recording the object (1) by means of the industrial robot and the object is recorded by the measurement system.

## Revendications

1. Procédé pour faire fonctionner un arrangement, lequel comprend un système de mesure destiné à déterminer les coordonnées 3D d'un objet (1) avec un projecteur (10) servant à projeter un modèle sur l'objet (1), une caméra (11) reliée avec le projecteur (10) dans une position et une orientation fixes, servant à enregistrer l'objet (1), et au moins une caméra de référence (16) reliée avec le projecteur (10) et la caméra (11) dans une position et une orientation fixes, servant à enregistrer un ou plusieurs repères de référence (6, 24) d'un champ (25) de repères de référence,
un dispositif d'interprétation destiné à déterminer la position et l'orientation du système de mesure sur un ou plusieurs enregistrements de la caméra de référence et un robot industriel destiné à positionner le système de mesure,
procédé selon lequel
- le champ de repères de référence est mesuré au moins une fois par procédé photogrammétrique et
- le système de mesure est utilisé pour l'étalonnage du robot industriel en détectant la position du robot industriel à l'aide du champ de repères de référence et du système de mesure.

2. Procédé selon la revendication 1, **caractérisé en ce que** le système de mesure comporte une ou plusieurs caméras de référence supplémentaires (17, 18) .

3. Procédé selon la revendication 2, **caractérisé en ce que** les caméras de référence (16, 17, 18) se trouvent sur un module de caméra (15).

4. Procédé selon l'une des revendications précédentes, le système de mesure étant utilisé pour déterminer les coordonnées 3D d'un objet (1),
**caractérisé en ce**
**que** l'objet (1) est positionné devant un champ de repères de référence (6, 24), l'objet (1) est entièrement ou partiellement enregistré avec le système de mesure et un ou plusieurs repères de référence (6, 24) d'un champ (25) de repères de référence sont enregistrés par une ou plusieurs caméras de référence (16, 17, 18).

5. Procédé selon la revendication 4, **caractérisé en ce que** des parties supplémentaires de l'objet (1) sont enregistrées avec le système de mesure.

6. Procédé selon l'une des revendications précédentes, la mesure du champ de repères de référence (6, 24) étant effectué
en positionnant le système de mesure dans plusieurs positions avec le robot industriel, en enregistrant avec le système de mesure un ou plusieurs ou la totalité des repères de référence (6, 24) dans ces positions et en ce que les positions des repères de référence (6, 24) sont déterminées à partir de ces enregistrements.

7. Procédé selon l'une des revendications précédentes,
le système de mesure étant positionné dans plusieurs positions prédéfinies en vue de l'étalonnage du robot industriel, un ou plusieurs ou la totalité des repères de référence (6, 24) d'un champ (25) de repères de référence étant enregistrés dans ces positions et les positions du robot industriel étant déterminées à partir de ces enregistrements et comparées aux positions prédéfinies.

8. Procédé selon l'une des revendications précédentes, le système de mesure étant utilisé pour déterminer les coordonnées 3D d'un objet,
**caractérisé en ce**
**que** le système de mesure, avec le projecteur (10) servant à projeter un modèle sur l'objet (1) et la caméra (11) reliée avec le projecteur et servant à enregistrer l'objet (1), est positionné par le robot industriel et l'objet est enregistré par le système de mesure.
